# EUROPEAN PATENT SPECIFICATION

(11) **EP 0 440 031 B1**
(45) Date of publication and mention of the grant of the patent: **30.11.1994**
(21) Application number: 91100330.9
(22) Date of filing: 11.01.1991
(51) Int. Cl.: F17C 3/08, B29C 67/22, B32B 15/08, B32B 5/20

(54) **Vacuum heat-insulating container**
Gegen Wärme vakuumisolierter Behälter
Réservoir isolé sous vide contre la chaleur

(30) Priority: 12.01.1990 JP 3396/90
(43) Date of publication of application: 07.08.1991
(73) Proprietor: NISSHINBO INDUSTRIES, INC., Chuo-ku Tokyo 103 (JP)
(72) Inventor: Morimoto, Kiyotake, Koshigaya-shi, Saitama-ken (JP); Sasaki, Toshio, Nagoya-shi, Aichi-ken (JP); Nakamura, Satoshi, Tokyo (JP)
(74) Representative: Kraus, Walter, Dr.

(56) References cited:
- FR-A- 1 273 907
- FR-A- 2 352 717
- GB-A- 1 403 771
- SU-A- 184 275

## Description

The present invention relates to a vacuum heat-insulating container constituted by a double-wall structure consisting of an inner container and an outer container, a vacuum being created in the space comprised between the inner container and the outer container, in which vacuum heat-insulating container the outer container has a composite structure comprising an outer surface material, an inner side surface material capable of maintaining vacuum, and a plastic foam disposed in the space between the outer surface material and the inner side surface material.

Particularly the present invention provides a vacuum heat-insulating container which is lightweight and has excellent heat-insulating property.

Vacuum heat-insulating containers are being used in various applications for low-tempeature insulation and high-temperature insulation and also in ultralow-temperature storage of liquefied gas, etc. owing to the excellent heat-insulating property. Since vacuum heat-insulating containers are required to be able to maintain high vacuum, to be able to withstand a vacuum pressure and to have sufficient strength during the service, their double-wall structure consisting of an inner container and an outer container (these two containers form a vaccum heat-insulating layer surrounded by them) has conventionally been made of a metal plate having a thickness of at least a certain level. As a result, conventional vacuum heat-insulating containers have been heavyweight naturally. Meanwhile, development of a lightweight vacuum heat-insulating container is an urgent task for the purpose of transportation cost reduction, particularly in the case of, for example, LNG container mounted on vehicle.

A vacuum heat-insulating container of the type mentioned in the beginning is known from FR-A-1 273 807. In this vacuum heat-insulating container the composite structure not only consists of the outer surface material, the inner side surface material and the plastic foam but rather comprises reinforcing rings as distance elements between the outer surface material and the inner side surface material. These reinforcing rings within the plastic foam and contacting both the outer surface material and the inner side surface material are essential constructive elements in the vacuum heat-insulating container of FR-A-1 273 907, and as similarly essential constructive elements there are additionally provided other reinforcing rings in the vacuum space between the inner and outer containers, which contact both containers and also serve as distance elements.

Such reinforcing rings as used in the vacuum heat-insulating container according to FR-A-1 273 907 result in the following:
(1) The reinforcing rings considerably enhance the overall weight of the vacuum heat-insulating container.
(2) The reinforcing rings significantly reduce the heat-insulating property of the container even if they are made from material of relatively low thermal conductivity because they form bridges through the foam and through the vacuum which are better thermal conductors than the foam and the vacuum, respectively.
(3) The reinforcing rings result in remarkably higher cost of the vacuum heat-insulating container not only due to their net cost but also particularly due to the relatively complicated structure of the container requiring additional assembling time and labour.

GB-A-1 403 771 discloses a method of making a thermally insulated container, which is particularly applicable to thermally insulated water containers and is also applicable to refrigerators. Such thermally insulated container has an inner casing and an outer casing which is separated from the inner casing by thermally insulating material and is made by enclosing the inner casing within the outer casing by disposing two or more outer casing parts in desired positions with regard to each other and in spaced relationship to the inner casing, holding the outer casing parts in these desired positions by a jig or jigs located on the outside of the outer casing and by preformed blocks of thermally insulating material disposed in localised positions between the inner casing and the outer casing parts, the blocks maintaining the spacing between the inner and outer casings while allowing for the flow of foamed plastics material therearound and with the outer casing parts held in these positions providing the layer of thermally insulating material between the casings by foaming a plastics material in situ which during setting becomes secured to the outer casing parts and holds them in their final relative positions.

However, this container according to GB-A-1 403 771 is only a simple double-walled container, e.g. for warm water, but not a vacuum container, that means:
(A) There is no great pressure difference which has the tendency to press the inner container towards the outer container as in a vacuum container. A vacuum corresponds to the pressure of about 10 m of water whereas the water container of GB-A-1 403 771 seems to be intended for relatively small containers of the type used in household appliances or so.
(B) Furthermore, the heat-insulating properties in the container of GB-A-1 403 771 for warm water or so are very uncritical as compared with the highly critical heat-insulating properties of a vacuum container to be used for liquid gases as e.g. liquified nitrogen.
(C) Finally the overall weight of such a container for warm water or so as disclosed in GB-A-1 403 771 are also uncritical because such containers are usually intended for stationary use whereas vacuum containers are widely used for transporting purposes.

Therefore, GB-A-1 403 771 does not provide means for solving the above-mentioned problems of vacuum containers according to the prior art as discussed in the beginning and as discussed above in regard of the vacuum container of FR-A-1 273 907.

It is an object of the present invention to provide a vacuum heat-insulating container which is lightweight and has excellent heat-insulating property.

Other objects and features of the present invention will become apparent from the following description.

According to the present invention, there is provided a vacuum heat-insulating container of the type mentioned in the beginning, which is characterized in that:
(a) said plastic foam is a rigid plastic foam having a compression strength of at least 7.848 bar (8 kg/cm²);
(b) said composite structure of the outer container is a sandwich structure consisting of said outer surface material, said inner side surface material and said rigid plastic foam; and
(c) said inner side surface material is an inner side membrane.

The vacuum heat-insulating container according to the present invention is hereinafter described in more detail with reference to one embodiment shown in the accompanying drawings.

Fig. 1 is a sectional view of a vacuum heat-insulating container of the present invention in the lengthwise direction.

Fig. 2 is a sectional view of the same container in the crosswise (or diameter) direction.

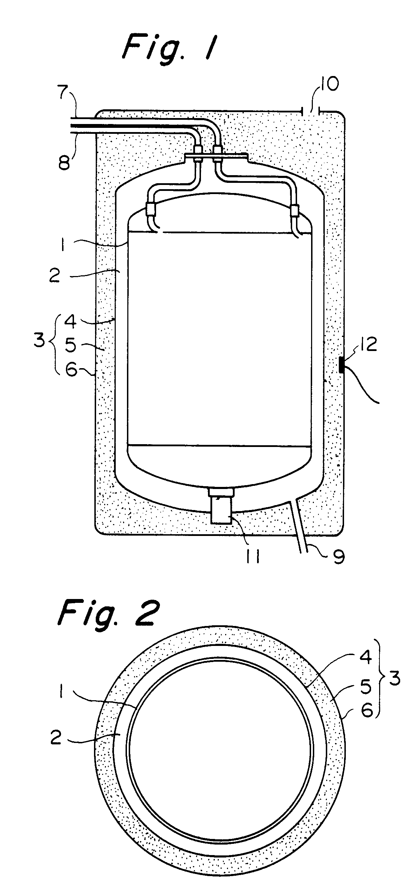

In Figs. 1 and 2, 1 is an inner container for storing a liquefied gas or the like of low temperature. As inner container there can be used the same metallic container capable of maintaining vacuum, as used as an inner container in conventional vacuum heat-insulating containers. As the metal constituting the inner container, stainless steel is preferably used generally. Its thickness can be varied depending upon the scale and the application purpose of the container but is usually about 2-3 mm.

Outside the inner container (1) is provided an outer container (3) via a vacuum heat-insulating layer (2). The space surrounded by the double wall of the inner container (1) and the outer container (3), i.e. the vacuum heat-insulating layer (2) is tightly sealed and separated from the outside air and maintained in a vacuum state.

The vacuum heat-insulating container of the present invention is intended to have a small weight by making the outer container (3) lightweight. Therefore, the outer container consists of an inner side membrane (4), an outer surface material (6) and a rigid plastic foam (5) placed in the gap between them, as shown in Figs. 1 and 2.

The inner side membrane (4) which comes in contact with the vacuum heat-insulating layer (2), is not required to have a high mechanical strength if it has tightness sufficient to maintain the vacuum heat-insulating layer in a vacuum state, and is not required to have by itself a strength capable of withstanding the vacuum pressure applied to the vacuum heat-insulating layer. The inner side membrane (4) is desired to be as thin and lightweight as possible as long as the desired vacuum of the vacuum heat-insulating layer is maintained, and there can be preferably used a metal membrane of generally 0.05-1 mm, preferably 0.1-0.5 mm in thickness. As the material for the metal membrane, there can be mentioned, for example, stainless steel, aluminum, duralumin, copper and nickel. Of these, stainless steel is preferable. A metal membrane which is weldable is advantageous for the processing standpoint.

Outside the membrane is provided a rigid plastic foam (5). The rigid plastic foam is preferably formed by in situ foaming of pourable or injectionable, foamable liquid. As the rigid plastic foam, there can be mentioned, for example, a rigid polyurethane foam, a polyisocyanurate foam and a phenolic resin foam. Of these, a rigid polyurethane foam is particularly preferable. The rigid polyurethane foam can be any ordinary polyurethane foam conventionally used in heat-insulating material applications.

The rigid plastic foam (5) is required to have a sufficient adhesion strength to the inner side membrane (4) so that the membrane is not peeled from the plastic foam by the suction of the vacuum pressure applied to the vacuum heat-insulating layer. In the case of a foamed in place rigid polyurethane foam, however, it self-adheres to the inner side membrane simultaneously with the foaming of polyurethane, producing a sufficient adhesion strength.

Meanwhile, the rigid plastic foam (5) is required to have a strength sufficient for protecting the outer container including plastic foam from being deformed or broken by the vacuum pressure of the vacuum heat-insulating layer (2). Hence, the rigid plastic foam (5) is required to have a compression strength of 7.848 bar (8 kg/cm²)or more when, for example, a rigid urethane foam (5) of 30 mm in thickness is formed on the outer surface of an inner side membrane (4) of 400 mm in diameter. The compression strength varies depending upon the size of the container and the thickness of the rigid plastic foam. A rigid plastic foam having a desired compression strength can be easily obtained by those skilled in the art, by empirically selecting, for example, the density of rigid plastic foam.

The rigid plastic foam (5) has advantages of not only supporting the inner side membrane (4) but also, when the vacuum of the vacuum heat-insulating layer (2) has been lost or reduced, preventing the rapid gasification of the contents stored in the vacuum heat-insulating container of the present invention owing to the excellent heat-insulating effect of the rigid plastic foam itself.

Outside the rigid plastic foam (5) is provided an outer surface material (6). By providing this outer surface material (6), the outer container (3) comes to have a sandwich structure consisting of an inner side membrane (4), a rigid plastic foam (5) and an outer surface material (6) and thereby can have an increased strength. The outer surface material (6) serves also as a protecting or coating material for the rigid plastic foam (5). As the outer surface material, there can be used, for example, a FRP plate, a plastic plate and a metal plate (e.g. colored iron plate, colored aluminum plate). In the case of a FRP plate, there can be preferably used a plate of generally about 1-3 mm in thickness.

It is possible to use, as part of the vacuum heat-insulating layer (2), a heat-insulating support (spacer) and further, if necessary, a radial shield for allowing the layer (2) to keep a space of given thickness.

The vacuum heat-insulating container of the present invention having the above constitution can be produced as follows, for example.

First, an inner container (1) provided with auxiliary equipment such as a pipe (7) for feeding and taking out a liquefied gas, is surrounded by a membrane (4) so that the inner container (1) and the membrane (4) forms a double-wall structure with a space [to become a vacuum heat-insulating layer (2)] being left between them, the space (the vacuum heat-insulating layer) between the inner container (1) and the membrane (4) is tightly sealed by, if necessary, subjecting them to welding or the like. In this case, the membrane (4) is provided with a pipe (9) for making the vacuum heat-insulating layer (2) vacuum (see Fig. 1).

The thus formed inner container-membrane assembly is set in a mold together with an outer surface material (6) while a given space for allowing foaming therein is secured between the assembly and the outer surface material.

Next, a starting foamable liquid for plastic foam is poured or injected into the space through an injection hole (10) (see Fig. 1). The poured or injected starting foamable liquid for plastic foam causes foaming, whereby the space is filled and a plastic foam layer is formed. In this case, the space for vacuum heat-insulating layer (2), provided between the inner container (1) and the membrane (4) is pressurized by a gas (e.g. air) fedthrough the pipe (9) for achieving vacuum. This pressurization can be effected by a pressure of 0.0981-1.962 bar (0.1-0.2 kg/cm²)before the pouring or injection, in order to retain the shape of the membrane. At least during the period from the pouring or injection of the starting foamable liquid to the completion of hardening, the pressure inside the space is desirably kept constantly higher by about 0.0981-0.4905 bar (0.1-0.5 kg/cm²) than the pressure of foaming, by, for example, measuring the pressure applied to the inner surface of the outer surface material (6), i.e. the foaming pressure by means of a pressure gauge or pressure sensor (12) (see Fig. 1) provided in the outer surface material.

The pressure control can be effected manually while watching the pressure gauge, or automatically by electric conversion of the foaming pressure detected. The amount of the starting foamable liquid to be poured or injected can be calculated from the volume of space to be occupied by plastic foam and the density of desired plastic foam.

The foaming and hardening of the starting foamable liquid poured or injected can be effected usually at room temperature. Optionally, the foaming and/or the hardening may be accelerated by heating the container to which the starting foamable liquid is poured or injected, to a temperature up to about 60°C.

The process for producing the vacuum heat-insulating container of the present invention is described hereinafter more specifically by way of Example.

### Example

There were prepared, as an inner container, a 30-liter container (weight: 11.5 kg) made of stainless steel SUS 304 and having a diameter of 300 mm, a height of 460 mm and a thickness of 2.0 mm; as a membrane, a membrane (weight: 2.6 kg) made of stainless steel SUS 304 and having a thickness of 0.3 mm; and as an outer surface material, a FRP plate (weight: 2.0 kg) having a thickness of 2.0 mm. They were assembled so that the thickness of a vacuum heat-insulating layer became 25 mm and the thickness of a plastic foam layer became 30 mm, and placed in a mold. A starting foamable liquid to become a rigid urethane foam having a density of 0.1 g/cm³ and a compression strength of 10.791 bar (11 kg/cm²) in a filled state, was poured into the plastic foam layer at room temperature and allowed to foam and harden, whereby the plastic foam layer was filled. The amount of the starting foamable liquid poured was 3.0 kg. The air pressure of the space for vacuum heat-Insulating layer was 0.0981-0.1962 bar (0.1-0.2 kg/cm²) before pouring and, during the period from the pouring to the completion of hardening, was kept higher by 0.0981 bar (0.1 kg/cm²) than the pressure of foaming by manual operation of a pressure gauge while watching the foaming pressure indicated by a pressure gauge. The highest foaming pressure was 0.6867 bar (0.7 kg/cm²). After the completion of the foaming, the system was allowed to stand and cooled to room temperature. When a liquefied natural gas (LNG) was stored in the resulting vacuum heat-insulating container, the container showed good performance.

### Comparative Example

A conventional type container was prepared using the same inner container and vacuum heat-insulating layer as in Example and, as an outer container, stainless steel SUS 304 (weight: 20 kg) having a thickness of 2.3 mm.

Incidentally, a radial shield (1.5 kg) and a heat-insulating support (1.0 kg) were used in each of the vacuum heat-insulating layers of Example and Comparative Example.

The comparison of weights of the containers of Example and Comparative Example were shown in Table 1.

**Table 1**

| Comparison of weights of the vacuum heat-insulating containers of Example and Comparative Example | | |
|---|---|---|
| | Example | Comparative Example |
| Inner container | SUS 304 (2.0 mm thick) 11.5 kg | SUS 304 (2.0 mm thick) 11.5 kg |
| Vacuum heat-insulating layer | Radial shield 1.5 kg | Radial shield 1.5 kg |
| | Heat-insulating support 1.0 kg | Heat-insulating support 1.0 kg |
| Outer container | SUS 304 membrane (0.3 mm thick) 2.6 kg | SUS 304 membrane (2.3 mm thick) 20 kg |
| | Rigid urethane foam (30 mm thick) 3 kg | |
| | Outer surface material (2.0 mm thick) 2 kg | |
| Total | 21.6 kg | 34 kg |

The vacuum heat-insulating container of the present invention has, as its outer container, a sandwich structure consisting of an inner side membrane capable of maintaining vacuum, a rigid plastic foam and an outer surface material and accordingly is lightweight, and yet has a sufficient strength and can maintain vacuum well.

The weight of the outer container can be made significantly light, as compared with those of conventional containers made of a metal. Therefore, the vacuum heat-insulating container of the present invention is most suitable also as a vacuum heat-insulating container to be mounted on vehicles.

## Claims

1. A vacuum heat-insulating container constituted by a double-wall structure consisting of an inner container (1) and an outer container (3), a vacuum being created in the space (2) comprised between the inner container (1) and the outer container (3), in which vacuum heat-insulating container the outer container (3) has a composite structure comprising an outer surface material (6), an inner side surface material (4) capable of maintaining vacuum, and a plastic foam (5) disposed in the space between the outer surface material and the inner side surface material (4),
characterized in that
(a) said plastic foam (5) is a rigid plastic foam (5) having a compression strength of at least 7.848 bar (8 kg/cm²);
(b) said composite structure of the outer container (3) is a sandwich structure (4, 5, 6) consisting of said outer surface material (6), said inner side surface material (4) and said rigid plastic foam (5); and
(c) said inner side surface material (4) is formed in the shape of an inner side membrane (4).

2. The container according to claim 1, characterized in that the inner side membrane (4) capable of maintaining vacuum is a metal membrane (4) of 0.05-1.0 mm in thickness which is weldable.

3. The container according to claim 1, characterized in that the metal membrane (4) is stainless steel.

4. The container according to claim 1, characterized in that the rigid plastic foam (5) is rigid polyurethane foam.

## Patentansprüche

1. Vakuumwärmeisolationsbehälter, gebildet durch eine Doppelwandstruktur, bestehend aus einem inneren Behälter (1) und einem äußeren Behälter (3), wobei in dem Raum (2), der zwischen dem inneren Behälter (1) und dem äußeren Behälter (3) eingeschlossen ist, ein Vakuum erzeugt ist, in welchem Vakuumwärmeisolationsbehälter der äußere Behälter (3) eine Verbundstruktur hat, umfassend ein äußeres Oberflächenmaterial (6), ein innenseitiges Oberflächenmaterial (4), das fähig ist, Vakuum aufrechtzuerhalten, und einen Kunststoffschaum (5), der in dem Raum zwischen dem äußeren Oberflächenmaterial und dem innenseitigen Oberflächenmaterial (4) angeordnet ist,
dadurch **gekennzeichnet,** daß
(a) der Kunststoffschaum (5) ein steifer Kunststoffschaum (5) ist, der eine Kompressionsfestigkeit von wenigstens 7,848 bar (8 kg/cm²) hat;
(b) die Verbundstruktur des äußeren Behälters (3) eine Sandwichstruktur (4, 5, 6) ist, bestehend aus dem äußeren Oberflächenmaterial (6), dem innenseitigen Oberflächenmaterial (4) und dem steifen Kunststoffschaum (5); und
(c) das innenseitige Oberflächenmaterial (4) in der Form einer innenseitigen Membrane (4) ausgebildet ist.

2. Behälter gemäß Anspruch 1, dadurch **gekennzeichnet,** daß die innenseitige Membrane (4), die fähig ist, Vakuum aufrechtzuerhalten, eine Metallmembrane (4) von 0,05-1,0 mm Dicke ist, welche schweißbar ist.

3. Behälter gemäß Anspruch 1, dadurch **gekennzeichnet,** daß die Metallmembrane (4) rostfreier Stahl ist.

4. Behälter gemäß Anspruch 1, dadurch **gekennzeichnet,** daß der steife Kunststoffschaum (5) steifer Polyurethanschaum ist.

## Revendications

1. Réservoir isolé sous vide contre la chaleur constitué d'une structure à double paroi composée d'un réservoir intérieur (1) et d'un réservoir extérieur (3), un vide étant créé dans l'espace (2) compris entre le réservoir intérieur (1) et le réservoir extérieur (3), réservoir isolé sous vide contre la chaleur dans lequel le réservoir extérieur (3) a une structure composite comprenant un matériau de surface extérieur (6), un matériau de surface latérale intérieur (4) capable d'entretenir le vide, et une matière plastique mousse (5) placée dans l'espace entre le matériau de surface extérieur et le matériau de surface latérale intérieur (4),
caractérisé en ce que
(a) ladite matière plastique mousse (5) est une matière plastique mousse (5) rigide ayant une résistance à la compression d'au moins 7.848 bar (8 kg/cm²);
(b) ladite structure composite du réservoir extérieur (3) est une structure en sandwich (4, 5, 6) composée dudit matériau de surface extérieur (6), dudit matériau de surface latérale intérieur (4) et de ladite matière plastique mousse (5) rigide; et
(c) ledit matériau de surface latérale intérieur (4) se présente sous la forme d'une membrane latérale intérieure (4).

2. Réservoir selon la revendication 1, caractérisé en ce que la membrane latérale intérieure (4) capable d'entretenir le vide est une membrane métallique (4) de 0.05-1.0 mm d'épaisseur, qui peut être soudée.

3. Réservoir selon la revendication 1, caractérisé en ce que la membrane métallique (4) est en acier inoxydable.

4. Réservoir selon la revendication 1, caractérisé en ce que la matière plastique mousse (5) est de la mousse rigide de polyuréthane.
